# EUROPÄISCHE PATENTSCHRIFT

(11) **EP 2 344 931 B1**
(45) Veröffentlichungstag und Bekanntmachung des Hinweises auf die Patenterteilung: **24.04.2013**
(21) Anmeldenummer: 09748029.7
(22) Anmeldetag: 16.10.2009
(51) Int. Cl.: G03H 1/18, G03H 1/00, B42D 15/00

(54) **VOLUMENHOLOGRAMM MIT EXPANSIONSMITTELSCHICHT BZW. KONTRAKTIONSMITTELSCHICHT ZUR ERZEUGUNG VON FARBMUSTERN**
VOLUME HOLOGRAM COMPRISING EXPANSION AGENT LAYER OR CONTRACTION AGENT LAYER FOR CREATING COLOR PATTERNS
HOLOGRAMME DE VOLUME DOTÉ D'UNE COUCHE D'AGENT D'EXPANSION OU D'UNE COUCHE D'AGENT DE CONTRACTION POUR PRODUIRE DES MOTIFS COLORÉS

(30) Priorität: 17.10.2008 DE 102008052067
(43) Veröffentlichungstag der Anmeldung: 20.07.2011
(73) Patentinhaber: OVD Kinegram AG, 6301 Zug (CH)
(72) Erfinder: HANSEN, Achim, CH-6300 Zug (CH); TOMPKIN, Wayne, Robert, CH-5400 Baden (CH); BURKHARDT, Dr., Markus, 90513 Zirndorf (DE); SCHARFENBERG, Michael, 90459 Nürnberg (DE)
(74) Vertreter: Louis Pöhlau Lohrentz
(86) Internationale Anmeldenummer: PCT/EP2009/007429
(87) Internationale Veröffentlichungsnummer: WO 2010/043403

(56) Entgegenhaltungen:
- WO-A1-2008/043351
- US-A- 5 856 048
- NAM KIM: "Holographic applications based on photopolymer materials" HANOI, VIETNAM. APRIL 5-8, 2004, 8. April 2004 (2004-04-08), Seiten 190-200, XP002564473

## Beschreibung

Die Erfindung betrifft ein Sicherheitselement in Form eines mehrschichtigen Folienkörpers, welches eine Volumenhologrammschicht mit zwei unterschiedlichen optischen Informationen aufweist sowie ein Verfahren zum Herstellen eines derartigen Sicherheitselementes.

Hologramme werden als Sicherheitselemente zum Schutz von Sicherheitsdokumenten, wie Banknoten, Geldersatzmittel, Kreditkarten, Pässen oder ID-Dokumenten sowie zur Produktsicherung eingesetzt. Bei Massenprodukten werden häufig Oberflächenhologramme eingesetzt, durch die sich interessante optisch variable Effekte, beispielsweise Bewegungseffekte, erzielen lassen und die sich durch eine hohe Lichtstärke auszeichnen.

Volumenhologramme, auch als Weißlichthologramme oder Lippmannhologramme bezeichnet, beruhen im Gegensatz zu Oberflächenhologrammen auf der Lichtbeugung an den Braggschen Ebenen einer transparenten Schicht, die lokale Brechzahlunterschiede aufweist.

Ein Sicherheitselement mit einem Volumenhologramm sowie die Herstellung eines solchen Sicherheitselements wird beispielsweise in der DE 10 2006 016 139 A1 beschrieben. Zur Herstellung eines Mehrschichtkörpers, welcher ein Volumenhologramm enthält, wird ein Oberflächenrelief als Master eingesetzt. Die Vorderseite des Masters wird unmittelbar oder unter Zwischenschaltung eines transparenten optischen Mediums in Kontakt mit der photosensitiven Schicht des Mehrschichtkörpers gebracht, in der das Volumenhologramm eingezeichnet werden soll. Anschließend wird der Master mit kohärentem Licht belichtet, wobei sich durch Überlagerung des auf den Master eingestrahlten und des von dem Master gebeugten Lichtes ein Interferenzmuster ausbildet, welches in der photosensitiven Schicht als Volumenhologramm aufgezeichnet wird. Das so in die photosensitive Schicht eingebrachte Volumenhologramm wird sodann durch Aushärtung der photosensitiven Schicht fixiert. Durch eine spezielle Ausgestaltung des Masters lassen sich hierbei zwei oder mehrere getrennte Bildinformationen in die photosensitive Schicht einschreiben.

Weiter wird in der EP 1 187 728 B1 beschrieben, zwei Volumenhologrammschichten, in denen Bildinformationen mittels unterschiedlicher holographischer Aufzeichnungsverfahren eingeschrieben worden sind, aufeinander zu laminieren. Für den Betrachter ergibt sich so ein Gesamteindruck, der sich aus den Bildinformationen der beiden Volumenhologrammschichten zusammensetzt. Hierbei ergibt sich jedoch der Nachteil, dass die Sicherheitselemente, die aus zwei Volumenhologrammschichten aufgebaut sind, relativ dick sind und es schwierig ist, die beiden Volumenhologramme passgenau aufeinander zu laminieren.

Es ist bekannt, dass organische Lösungsmittel, die mit Volumenhologrammen in Kontakt gebracht werden, den Beugungswirkungsgrad erhöhen und die Farbigkeit beeinflussen können. Durch Eindiffusion organischer Moleküle in das Volumenhologramm kann ein Schwellen und damit eine Abstandsänderung der holographischen Netzebenen verursacht werden, welches insbesondere für Reflexionsvolumenhologramme eine Farbvertiefung zur Folge hat (US 5,415,950). Allerdings ist es nicht möglich, mit Lösungsmitteln nur partielle Teile des Hologramms zu schwellen, die neue sichtbare Information darstellen. Dazu sind Expansionsmittel notwendig, deren Diffusionseigenschaften lokal gezielt variiert werden können.

Die WO 2007/131496 beschreibt ein Verfahren, bei welchem eine holographische Photofolie mit einem lichtaushärtbaren Expansionsmittel in Kontakt gebracht wird, das einer Maskenbelichtung unterworfen wird, so dass ein differenziertes Expandieren der Photofolie durch differenziertes Eindiffundieren des Expansionsmittels in der Photofolie erfolgt, wobei nach einem definierten Zeitraum die Expandierung durch eine vollständige Belichtung des Expansionsmittels beendet wird.

Die US 5,182,180 beschreibt ein Verfahren, bei welchem auf ein Volumenhologramm ein teilbelichteter Diffusionsfilm aufgebracht wird, wodurch ein lokales Schwellen des Volumenhologramms verursacht wird.

Die US 5 856 048 A beschreibt die Ausbildung eines Volumenhologramms (eines Lippmannhologramms) durch Interferenz zweier Lichtstrahlen in einem Photopolymer, das auf einer Trägerfolie angeordnet ist, und ein nachfolgendes musterförmiges Quellen der Volumenhologramm-Schicht durch Monomere, die aus einer aufgedruckten quellenden Tinte in die Volumenhologramm-Schicht eindiffundieren. In einem Ausführungsbeispiel ist ein Laminat vorgesehen, das eine Expansionsmittel-Schicht und eine Volumenhologramm-Schicht umfasst, wobei auf beiden Seiten des Laminats je eine PET-Folie aufgebracht ist. Die US 5 856 048 A beschreibt sowohl den Fall, dass zunächst das Volumenhologramm erzeugt und danach gequollen wird als auch den Fall, dass holografisches Material zunächst überall gequollen wird und erst danach in dem Material ein Volumenhologramm erzeugt wird.

Die WO 2008/043351 A1 beschreibt ein Verfahren zur Herstellung eines Hologramms, insbesondere zu dessen Individualisierung, wobei das Hologramm bereits auf ein Dokument aufgebracht ist. Es kann sich etwa um eine holografische Portraitaufnahme handeln, unter anderem zur Verwendung für ein Sicherheits- oder Wertdokument. Dazu wird in eine Photoschicht ein Hologramm belichtet und fixiert, und auf diese Hologrammschicht wird selektiv und einer Abbildung entsprechend ein Quellmittel aufgebracht, das in die Photoschicht diffundieren kann. Das Auftragen des Quellmittels auf die Hologrammschicht erfolgt individuell unterschiedlich stark und selektiv, z. B. mittels Tintenstrahldruck. Durch verzögertes bzw. mehrfaches, hintereinander folgendes Auftragen des Quellmittels in einzelnen Bildbereichen können unterschiedlich lange Einwirkzeiten des Quellmittels und dadurch Bereiche und Bildpunkte unterschiedlicher Farbe erreicht werden. Auf diese Weise kann für jeden Bildpunkt auf dem Hologramm der Abstand der Netzebenen unterschiedlich vergrößert werden und eine dementsprechende Farbverschiebung verursacht werden. So kann ein Echtfarben-Portraitfoto erzeugt werden.

Der Erfindung liegt nun die Aufgabe zugrunde, ein verbessertes Sicherheitselement sowie ein Verfahren zu dessen Herstellung anzugeben.

Die Aufgabe wird durch ein Verfahren zum Herstellen eines Sicherheitselements in Form eines mehrschichtigen Folienkörpers, insbesondere einer Laminierfolie oder einer Transferfolie gemäß den Ansprüchen 1 und 2 und durch ein Sicherheitselement gemäß Anspruch 11 gelöst.

Die Schichten des Sicherheitselementes können jeweils in einem Druckverfahren aufgebracht werden.

Unter optischer Information wird vorzugsweise eine visuell erkennbare oder maschinenlesbare Information verstanden.

Unter Laminierfolien sind insbesondere Folienkörper zu verstehen, die eine selbsttragende Trägerfolie aufweisen, auf die weitere Schichten auflaminiert werden. Vorzugsweise ist zwischen der selbstragenden Trägerfolie und den weiteren Schichten eine Klebeschicht angeordnet. Hierdurch wird vorzugsweise verhindert, dass die selbsttragende Trägerfolie von den weiteren Schichten abgelöst werden kann.

Unter Transferfolien sind insbesondere Folienkörper zu verstehen, die eine Trägerfolie und eine(n) davon ablösbare(n) Schicht (Schichtstapel) aufweisen. Bei der Applikation der Transferfolie auf ein Substrat wird die Schicht/Schichtstapel am Substrat fixiert und anschließend die Trägerfolie abgezogen. Die Schicht bzw. der Schichtstapel ist dabei üblicherweise nicht selbsttragend. Transferfolien können als Prägefolien, insbesondere als Heißprägefolien, ausgebildet werden. Transferfolien finden beispielsweise beim Markenschutz Anwendung. Durch die Transferfolien können die Markenzeichen auf Behälter, Aufkleber, Anhänger, Schilder und/oder CD-Hüllen übertragen werden.

Sicherheitselemente sind Elemente, die insbesondere zur Erhöhung der Fälschungssicherheit von Sicherheitsdokumenten sowie zur Produktsicherung eingesetzt werden. Zu solchen Sicherheitsdokumenten gehören beispielsweise Banknoten, Geldersatzmittel, Bankkarten, Pässe, Wertpapiere, Lotterielose und/oder ID-Dokumente.

Unter einem Photopolymer ist insbesondere ein Polymermedium zu verstehen, in welchem ein photosensitives Material verteilt ist, welches geeignet ist, lichtbrechende Strukturen zu erzeugen, wenn das Photopolymer mit kohärentem Licht bestrahlt wird. Als Polymermedium können beispielsweise Gelatine, Karageen, Stärke, Agar, Agarose, Polyvinylalkohol, Acrylate, Methacrylate, Polysaccharide, Proteine, Cellulose, Celluloseacetat, Polyamide, Polyole, insbesondere Polyetherpolyol, Polyisocyanate, Polyimide, Polyacrylamide, Polystyrol und/oder Copolymere davon eingesetzt werden.

Als typische Polymere können Polyvinylpyrrolidon, Polyhydroxyethylacetat, Polyhydroxyethylmethacrylat, Polymethacrylamid und/oder Polyacrylamid eingesetzt werden. Besonders bevorzugt wird Polyhydroxyethylmethacrylat eingesetzt.

Vorzugsweise sind der Volumenhologrammschicht Rizinusöl und/oder Rizinusölderivate beigemischt.

Das Photopolymermedium sollte ferner geeignet sein, nach der Eindiffusion von Expansionsmittel eine Volumenexpansion und/oder nach der Eindiffusion von Kontraktionsmittel eine Volumenkontraktion einzugehen.

Als photosensitives Material können beispielsweise Silberhalogenidpartikel eingesetzt werden. Alternativ kann auch ein Photopolymermedium eingesetzt werden, in welchem durch selektive Bestrahlung und Polymerisation ein Braggsches Gitter erzeugt werden kann. In diesem Fall wird dem Photopolymermedium vorzugsweise als photosensitives Material ein Photoinitiationspolymerisationsinitiator zugesetzt. Als Photoinitiatoren werden beispielsweise Quinone, Photoreduzierbare Farbstoffe, Trichlormethyltriazine und/oder 2,4,5-Triphenylimidazolyldimere eingesetzt.

Grundsätzlich sind außer photopolymerisierbaren Systemen auch andere photoreaktive, photochrome und/oder photorefraktive Systeme geeignet, wie sie beispielsweise für photographische Zwecke eingesetzt werden.

Die Volumenhologrammschicht umfasst vorzugsweise ein Braggsches Gitter aus mindestens 2 Braggschen Netzebenen. Bei einer Ausführungsform weist die Volumenhologrammschicht 2 bis 100, vorzugsweise 5 bis 50, weiter bevorzugt 5 bis 20 Braggsche Netzebenen auf. Innerhalb der Braggschen Netzebenen gibt es lokale Änderungen der Brechungsindizes.

Bei einer Ausführungsform weist die Volumenhologrammschicht einen Dicke von 5 µm bis 250 µm, vorzugsweise von 5 bis 100 µm, weiter bevorzugt von 10 bis 30 µm, auf.

Bei einer Ausführungsform wird durch Bestrahlung mit 2 Lichtstrahlen aus kohärentem Licht die erste optische Information in dem Photopolymer unter Bereitstellung einer Volumenhologrammschicht erzeugt. Die Volumenhologrammschicht ist vorzugsweise aus einem Braggschen Gitter mit mindestens 2 Braggschen Ebenen gebildet. Vorzugsweise wird das Photopolymer anschließend teilweise thermisch oder strahlengehärtet, um die erste optische Information zu fixieren. Unter Strahlenhärtung im Sinne der Erfindung in diesem oder einem der folgenden Schritte kann eine Härtung durch UV-, VIS- und/oder IR-Strahlung verstanden werden. Vorzugsweise wird mit UV-Strahlung gehärtet. Bei der ersten optischen Information handelt es sich um ein Volumenhologramm, das beispielsweise ein Bild, Text, Logo, Photo, Barcode, Film, Guilloche, Designelement und/oder andere sicherheitsrelevante Information zeigt. Das Volumenhologramm kann sich durch die gesamte Volumenhologrammschicht erstrecken oder nur durch Teile davon. Unter einer sicherheitsrelevanten Information ist eine optische Information zu verstehen, die zur Prüfung des Sicherheitselementes auf Authentizität dienen kann.

Vor dem Einschreiben des Volumenhologramms in die Volumenhologrammschicht kann die Volumenhologrammschicht teilweise thermisch oder strahlengehärtet gehärtet werden. Nach dem Einschreiben des Volumenhologramms in die Volumenhologrammschicht kann die Volumenhologrammschicht vollständig gehärtet werden. Dieser Schritt kann vor oder nach dem Aufbringen der Barriereschicht durchgeführt werden. Die Härtung der Volumenhologrammschicht kann zusammen mit der Härtung einer ggf. aufgebrachten Barriereschicht erfolgen.

Zwischen der Trägerfolie und der Volumenhologrammschicht oder zwischen der Volumenhologrammschicht und dem Expansionsmittel und/oder Kontraktionsmittel können weitere Schichten angeordnet sein.

Zwischen der Ebene, in der das Expansionsmittel und/oder Kontraktionsmittel aufgebracht wird, und der Volumenhologrammschicht kann eine Trennschicht aufgebracht werden. Zwischen der Ebene, in der das Expansionsmittel und/oder Kontraktionsmittel aufgebracht wird, und der Maskenschicht oder zwischen der Ebene der Maskenschicht und der Volumenhologrammschicht kann eine Trennschicht aufgebracht werden. Unter Trennschicht ist eine Schicht zu verstehen, die die Diffusion des Expansionsmittels und/oder Kontraktionsmittels in die Volumenhologrammschicht verringert oder verhindert, wobei die Trennschicht, beispielsweise durch thermische Behandlung oder Druckbehandlung, inaktiviert werden kann, sodass das Expansionsmittel und/oder Kontraktionsmittel in die Volumenhologrammschicht diffundiert. Bei einer alternativen Ausführungsform kann anstelle der Trennschicht auch das Expansionsmittel und/oder Kontraktionsmittel verkapselt sein. Das Kapselmaterial verringert oder verhindert vorzugsweise die Diffusion des Expansionsmittels und/oder Kontraktionsmittels in die Volumenhologrammschicht, wobei das Kapselmaterial, beispielsweise durch thermische Behandlung und/oder Druckbehandlung, inaktiviert werden kann, sodass das Expansionsmittel und/oder Kontraktionsmittel in die Volumenhologrammschicht diffundiert. Als Trennschicht oder als Kapselmaterial kann beispielsweise Wachs verwendet werden. Die Inaktivierung der Trennschicht kann vor oder nach dem Einschreiben des Volumenhologramms in die Volumenhologrammschicht erfolgen.

Zur Herstellung der Volumenhologrammschicht kann ein Oberflächenrelief eingesetzt werden. Die Vorderseite des Oberflächenreliefs kann unmittelbar oder unter Zwischenschaltung eines transparenten optischen Mediums in Kontakt mit der Photopolymerschicht des Mehrschichtkörpers gebracht werden, in der das Volumenhologramm eingezeichnet werden soll. Anschließend kann das Oberflächenrelief mit kohärentem Licht durch die Photopolymerschicht hindurch belichtet werden, wobei sich durch Überlagerung des von dem Oberflächenrelief gebeugten Lichts ein Interferenzmuster ausbildet, welches in der Photopolymerschicht als Volumenhologramm eingeschrieben wird. Vorzugsweise wird das so in die Photopolymerschicht eingebrachte Volumenhologramm nach teilweiser Aushärtung der Photopolymerschicht durch thermische Härtung und/oder Strahlenhärtung fixiert. Bei einer bevorzugten Ausführungsform handelt es sich um ein metallisches Oberflächenrelief. Das Oberflächenrelief wird vorzugsweise nach der teilweisen Härtung der photosensitiven Schicht entfernt. Anschließend kann noch weiter teilweise nachgehärtet werden. Unter einer teilweisen Härtung der photosensitiven Schicht ist vorzugsweise zu verstehen, dass die photosensitive Polymerschicht nicht vollständig auspolymerisiert, sodass Expansionsmittel und/oder Kontraktionsmittel in die photosensitive Schicht eindiffundieren können. Gegebenenfalls kann die photosensitive Polymerschicht anschließend durch thermische Härtung und/oder Strahlenhärtung der Expansionsmittel und/oder Kontraktionsmittel durch weitere Polymerisation aushärten.

Bei einer Ausführungsform des erfindungsgemäßen Verfahrens wird ein Oberflächenrelief auf die Volumenhologrammschicht aufgebracht und durch Bestrahlung der Volumenhologrammschicht von der dem Oberflächenrelief abgewandten Seite das Volumenhologramm eingeschrieben. Anschließend kann das Oberflächenrelief entfernt werden. Bei einer Ausführungsform wird das Expansionsmittel und/oder Kontraktionsmittel und die Maskenschicht auf der dem Oberflächenrelief abgewandten Seite des Volumenholgramms aufgebracht. Bei einer anderen Ausführungsform wird das Expansionsmittel und/oder Kontraktionsmittel und die Maskenschicht auf der Seite der Volumenhologrammschicht aufgebracht, auf der das Oberflächenrelief angeordnet ist bzw. war.

Bei dem erfindungsgemäßen Verfahren wird durch Eindiffundieren mindestens eines Expansionsmittels und/oder eines Kontraktionsmittels der Abstand der Braggschen Ebenen vergrößert und/oder verkleinert, was zu einer Farbverschiebung im Volumenhologramm führt. Alternativ kann das Kontraktionsmittel auch auf der Volumenhologrammschicht verbleiben und aus der Volumenhologrammschicht Monomere oder andere niedermolekulare Substanzen heraussaugen, wodurch in der Volumenhologrammschicht eine Kontraktion eintritt. Vorzugsweise wird das Expansionsmittel und/oder Kontraktionsmittel auf der Seite der Volumenhologrammschicht aufgebracht, von welcher die Strahlung eingestrahlt wurde, mit welcher das Volumenhologramm eingeschrieben wurde. Durch Expansionsmittel kann die Farbe zu größeren Wellenlängen, ggf. bis in den roten Farbbereich, vorzugsweise sogar in den Infrarotbereich, verschoben werden. Der Bereich des Volumenhologramms dessen Farbe durch das Eindiffundieren des Expansionsmittel in den Infrarotbereich verschoben wird, erscheint transparent. Durch Kontraktionsmittel kann die Farbe in den kurzwelligen Bereich, ggf. in den blauen Farbbereich, hineinverschoben werden. Hierdurch kann durch gezieltes lokales Aufbringen eines Expansionsmittels und/oder eines Kontraktionsmittels eine zweite optische Information bereit gestellt werden. Bei der zweiten optischen Information kann es sich beispielsweise um ein Bild, Text, Logo, Photo, Barcode, Film, Guilloche, Designelement und/oder andere sicherheitsrelevante Information handeln. Das Eindiffundieren kann durch einen thermischen Temperprozess beschleunigt werden. Vorzugsweise wird das Tempern bei einer Temperatur von 20°C bis 140°C, vorzugsweise 20°C bis 100°C, am meisten bevorzugt 20°C bis 30°C, über einen Zeitraum von 5 sec. bis 120 min, vorzugsweise 30 sec bis 10 min, durchgeführt. Bei Temperaturen um die Raumtemperatur (25°C) erfolgt der Farbshift sehr koordiniert und kann bei der richtigen Farbe gestoppt werden.

Durch ein gezieltes Aufbringen des Expansionsmittels und/oder eines Kontraktionsmittels kann somit die Farbe der ersten optischen Information gezielt variiert werden. Vorzugsweise wird jedoch mit der zweiten optischen Information ein von der ersten optischen Information unabhängiges Bild, Text, Logo, Photo, Barcode, Film, Guilloche, Designelement und/oder andere sicherheitsrelevante Information darstellt. Das Expansionsmittel kann auch als Quellmittel bezeichnet werden. Das Kontraktionsmittel kann auch als Schrumpfmittel bezeichnet werden.

Bei dem erfindungsgemäßen Verfahren wird in Schritt c1 oder Schritt b2 mindestens eine Maskenschicht partiell auf die Volumenhologrammschicht aufgebracht und anschließend vollflächig eine Schicht eines Expansionsmittels und/oder Kontraktionsmittels auf die Maskenschicht und davon freie Bereiche der Volumenhologrammschicht aufgebracht. Vorzugsweise wird die Maskenschicht vor dem Aufbringen des Expansionsmittels und/oder Kontraktionsmittels thermisch gehärtet und/oder strahlengehärtet. Die Maskenschicht ist für das Expansionsmittel und/oder Kontraktionsmittel vollständig oder zumindest teilweise undurchlässig. Hierdurch erfolgt eine partielle Diffusion des Expansionsmittels und/oder Kontraktionsmittels in die Volumenhologrammschicht unter der Bereitstellung der zweiten optischen Information, vorzugsweise eines Bilds, Textes, Logos, Photos, Barcodes und/oder anderer sicherheitsrelevanter Information. Dementsprechend wird die Maskenschicht überall dort auf die Volumenhologrammschicht aufgebracht wird, wo keine oder reduzierte Diffusion des Expansionsmittels und/oder Kontraktionsmittels in die Volumenhologrammschicht erfolgen soll.

Bei einer Ausführungsform des erfindungsgemäßen Verfahrens wird ein Expansionsmittel eingesetzt, welches ein polymerisierbares Monomer oder eine polymerisierbare Vorstufe eines Polymers umfasst. Vorzugsweise handelt es sich bei dem Expansionsmittel um ein polymerisierbares Monomer und/oder eine polymerisierbare Vorstufe des Polymers, aus welchem das Photopolymerträgermedium besteht oder zumindest kompatibel hierzu ist. Unter kompatibel ist in diesem Zusammenhang zu verstehen, dass das Polymer der Photopolymerschicht und das Monomer und/oder die Vorstufe des Polymers bei einer Polymerisation miteinander verknüpft werden oder verknüpft werden können.

Als Expansionsmittel können Acrylate, insbesondere Ethylenethylacrylat (EEA), Diethylenglycoldiacrylate, 2,5-Thiophendicarbonsäure (TDA), Isobornylacrylat, Trimethylolpropantriacrylat, aromatische Monomere, wie 2-Phenylethylacrylat, 2-Phenoxyethylmethacrylat, 2-Phenoxyethylacrylat (POEA), Phenylacrylat, Gemische aus 2-Naphthylacrylat/POEA, vorzugsweise im Verhältnis aus 1:3 bis 1:5, eingesetzt werden. Dem Expansionsmittel kann ein Bindemittel, wie ein aliphatisches oder aromatisches Bindemittel, zugesetzt werden. Als Expansionsmittel kann beispielsweise Celluloseacetatbutyrat (CAB), PMMA, Polystyrol/Acrylnitril-Copolymerisate (PSAN), und/oder Styrol/Methylmethacrylat-Copoymere (PSMMA) eingesetzt werden.

Das Eindiffundieren des Expansionsmittels und/oder des Kontraktionsmittels ist reversibel oder irreversibel. Vorzugsweise wird das Expansionsmittel und/oder das Kontraktionsmittel innerhalb der Volumenhologrammschicht fixiert. Hierdurch kann die Diffusion gestoppt werden. Vorzugsweise ist das Expansionsmittel und/oder Kontraktionsmittel strahlenhärtbar oder thermisch härtbar, wodurch eine Fixierung erfolgen kann. Durch die Wahl des Zeitpunktes der Fixierung kann der Grad der Diffusion gesteuert werden. Alternativ oder kumulativ kann das Expansionsmittel und/oder Kontraktionsmittel von der Volumenhologrammschicht abgewaschen werden. So kann ebenfalls die Expansion und/oder Kontraktion nach einer gewissen Zeit gestoppt werden.

Bei einer alternativen Ausführungsform wird mindestens eine Barriereschicht auf die Seite des Volumenhologramms, auf welcher das Expansionsmittel und/oder Kontraktionsmittel, aufgebracht ist, aufgetragen. Die Barriereschicht ist für das Expansionsmittel und/oder Kontraktionsmittel vollständig oder zumindest im Wesentlichen undurchlässig. Hierdurch wird eine partielle Diffusion des Expansionsmittels und/oder Kontraktionsmittels aus der Volumenhologrammschicht verhindert und/oder verringert, wodurch die zweite optische Information in der Volumenhologrammschicht auch ohne thermische Härtung oder Strahlenhärtung fixiert wird. Bei einer Ausführungsform wird auch auf der Seite des Volumenhologramms, auf welchem kein Expansionsmittel und/oder Kontraktionsmittel aufgebracht ist, eine Barriereschicht aufgebracht.

Vorzugsweise wird das Expansionsmittel und/oder Kontraktionsmittel in einer Schichtdicke von 10 bis 100 µm, vorzugsweise 15 bis 30 µm, am meisten bevorzugt von 15 bis 25 µm, auf die Volumenhologrammschicht bzw. Maskenschicht aufgebracht. Durch derartige dünne Schichtdicken wird eine seitliche Diffusion minimiert. Das Expansionsmittel und/oder das Kontraktionsmittel können zusätzlich nach dem Aufbringen gehärtet werden. Das Härten des Expansionsmittels und/oder des Kontraktionsmittels kann vor oder nach dem Aufbringen einer Barriereschicht durchgeführt werden. Im Falle der nachträglichen Härtung sollte die Barriereschicht strahlendurchlässig, insbesondere UV-durchlässig, ausgebildet sein. Die Barriereschicht kann ebenfalls strahlengehärtet und/oder thermisch gehärtet werden. Das Härten des Expansionsmittels und/oder des Kontraktionsmittels und der Barriereschicht kann in einem Schritt erfolgen. Die Verwendung einer Maskenschicht ermöglicht genaueres Aufdrucken als wenn die diffusionsfähigen Expansionsmittels und/oder des Kontraktionsmittels aufgedruckt werden. Vorzugsweise wird eine Auflösung von 250 bis 1500 dpi, weiter bevorzugt von 400 bis 1200 dpi, am meisten bevorzugt von 800 bis 1000 dpi, erreicht. Vorzugsweise kann das Material der Maskenschicht ohne Verlaufen aufgedruckt werden. Bei der Verwendung einer Maskenschicht können als Expansionsmittel auch Lösungsmittel, wie beispielsweise Aceton, Pyridin, Dichlormethan, ggf. in Mischung mit Wasser oder Isopropanol, eingesetzt werden. Die Verwendung von polymerisierbaren Verbindungen als Expansionsmittel und/oder Kontraktionsmittel ist jedoch bevorzugt, da Lösungsmittel nur eine temporäre Expansion der Volumenhologrammschicht verursachen, die reversibel ist, da die Lösungsmittel beim Trocknen wieder aus der Volumenhologrammschicht herausdiffundieren.

Bei einer Ausführungsform wird als Barriereschicht und/oder Maskenschicht

| | |
|---|---|
| Hexandioldimethacrylate (HDDA) | 25 bis 40 Gew.-%, vorzugsweise 30 bis 35 Gew.-% |
| Pentaerythritoltriacrylat | 55 bis 70 Gew.-%, vorzugsweise 60 bis 65 Gew.-%, |
| Photoinitiator | 3 bis 10 Gew.-%, vorzugsweise 5 bis 7 Gew.-%, |

bezogen auf das Gesamtgewicht der Barriereschicht eingesetzt.

Die Maskenschicht und/oder die Barriereschicht können durch Tintenstrahldruck, Tiefdruck, Reverse Gravur, Micro Gravur, Reverse Slip, Reverse Roll, Siebdruck, Offsetdruck, Flexodruck und/oder Lithographie aufgebracht werden. Das Expansionsmittel und/oder Kontraktionsmittel können durch Tintenstrahldruck, Tiefdruck, Reverse Gravur, Micro Gravur, Reverse Slip, Reverse Roll, Siebdruck, Offsetdruck und/oder Flexodruck aufgetragen werden.

Bei einer Ausführungsform wird das Sicherheitselement mit der Barriereschicht über eine Klebstoffschicht mit einem Sicherheitsdokument verbunden.

Während die Maskenschicht ein partielles Eindiffundieren des Expansionsmittels und/oder des Kontraktionsmittels in die Volumenhologrammschicht bzw. ein partielles Heraussaugen von Monomeren oder anderen niedermolekularen Verbindungen aus der Volumenhologrammschicht ermöglicht, wird durch die Barriereschicht ferner vorzugsweise verhindert, dass Klebstoff aus der Klebeschicht, mit welcher das Sicherheitselement auf einem Sicherheitsdokument aufgebracht wird, in die Volumenhologrammschicht diffundiert und dort eine Farbverschiebung verursacht. Ferner kann die Barriereschicht auch das Herausdiffundieren von flüchtigen Verbindungen aus der Volumenhologrammschicht verhindern. Somit sollte die Barriereschicht immer erst nach dem Aufbringen des Expansionsmittels und/oder Kontraktionsmittels aufgebracht werden.

Bei einer Ausführungsform des erfindungsgemäßen Verfahrens wird das Expansionsmittel und/oder Kontraktionsmittel, welches nicht in die Volumenhologrammschicht diffundiert ist, zumindest teilweise entfernt. Dies hat den Vorteil, dass ein weiteres Expandieren und/oder Kontrahieren der Braggschen Ebenen verhindert wird und das Sicherheitselement dünner wird.

Der durch die Vergrößerung oder Verkleinerung des Abstands der Braggschen Ebenen hervorgerufene Farbeffekt kann durch verschiedene Maßnahmen hervorgerufen werden. Das Expansionsmittel und/oder Kontraktionsmittel kann in verschiedenen Konzentrationen und/oder Dicken aufgebracht werden und/oder es können verschiedene Expansionsmittel und/oder Kontraktionsmittel mit unterschiedlichen Diffusionsverhalten aufgebracht werden. Danach wird es dem Expansionsmittel und/oder Kontraktionsmittel ermöglicht, in die Volumenhologrammschicht einzudiffundieren, z.B. einfach durch Belassen des Expansionsmittel und/oder Kontraktionsmittel auf der Volumenhologrammschicht während einer Einwirkzeit. Es wird eine zumindest partielle Diffusion des Expansionsmittels und/oder Kontraktionsmittels in die Volumenhologrammschicht zugelassen. Es wird also mindestens ein Expansionsmittel und/oder Kontraktionsmittel innerhalb der Volumenhologrammschicht in Form eines Musters eingebracht, wobei das Expansionsmittel und/oder Kontraktiorismittel einen Netzebenenabstand der Netzebenen des Braggschen Gitters innerhalb der Volumenhologrammschicht verändert und wobei eine zweite optische Information bereit gestellt wird. Die Menge des in die Volumenhologrammschicht diffundierten Expansionsmittels und/oder Kontraktionsmittels kann durch die aufgetragene Menge, Konzentration, Temperatur und Einwirkzeit beeinflusst werden.

Vorteilhafterweise wird das Expansionsmittel und/oder Kontraktionsmittel bereits in der Menge aufgebracht, die bei vollständiger Diffusion in die Volumenhologrammschicht den gewünschten Farbwechsel erzielt. Die richtige Einwirkzeit kann durch spektroskopische Messungen, beispielsweise der Reflexion, Absorption oder Transmission, des eingestrahlten Lichtes bestimmt werden. Bei einer Ausführungsform wird eine bestimmte Fläche der Volumenhologrammschicht mit Weißlicht bestrahlt und das Absorptionsspektrum des transmittierten Lichtes bestimmt. Alternativ kann die Farbverschiebung auch im reflektierten Licht gemessen werden.

Für mehrfarbige Bilder können unterschiedliche Maßnahmen kombiniert werden. Bei einer Ausführungsform werden in Schritt c1) oder b2) das Expansionsmittel und/oder Kontraktionsmittel in mindestens zwei verschiedenen Konzentrationen und/oder Dicken aufgebracht und/oder es werden mindestens zwei verschiedene Expansionsmittel und/oder Kontraktionsmittel mit unterschiedlichen Diffusionsverhalten aufgebracht.

Bei einer Ausführungsform kann durch die Anordnung von jeweils drei verschiedenen Farbpunkten Seite an Seite als Dreifarbenpunkt jede beliebige Farbe erzeugt werden. Die Farbpunkte sind dabei so klein ausgebildet, dass sie mit dem menschlichen Auge nicht einzeln aufgelöst werden können, sondern dass eine Mischfarbe (additive Mischung) der Farbeindrücke der Farbpunkte wahrnehmbar ist. Vorzugsweise wird mit einer Kombination der Farben rot, grün und blau gearbeitet. Durch die Kombination einer Vielzahl solcher Dreifarbenpunkte kann ein vielfarbiges oder echtfarbiges Bild erzeugt werden.

Die Aufgabe wird ferner durch ein Sicherheitselement in Form eines mehrschichtigen Folienkörpers, insbesondere Laminierfolie oder Transferfolie, gelöst, wobei das Sicherheitselement eine Volumenhologrammschicht aus einem Photopolymer aufweist, wobei bereichsweise unterschiedliche Brechungsindizes zu einem Braggschen Gitter unter Bereitstellung einer ersten optischen Information ausgebildet sind, wobei innerhalb der Volumenhologrammschicht mindestens ein Expansionsmittel und/oder Kontraktionsmittel in Form eines Musters eingebracht ist, das einen Netzebenenabstand der Netzebenen des Braggschen Gitters innerhalb der Volumenhologrammschicht verändert, wobei eine zweite optische Information bereit gestellt ist.

Bei einer Ausführungsform des Sicherheitselementes wird ein druckbares Expansionsmittel und/oder druckbares Kontraktionsmittel verwendet. Auf der Volumenhologrammschicht ist eine Maskenschicht angeordnet, die zumindest teilweise undurchlässig für das Expansionsmittel und/oder Kontraktionsmittel ausgebildet ist. Zusätzlich kann auf der Volumenhologrammschicht eine Barriereschicht angeordnet sein. Vorzugsweise ist das Sicherheitselement gemäß dem vorstehend beschriebenen Verfahren herstellbar.

Es ist möglich, dass das Sicherheitselement eine Schicht oder Ebene aufweist, in der das Expansionsmittel und/oder Kontraktionsmittel aufgebracht ist.

Zwischen der Ebene, in der das Expansionsmittel und/oder Kontraktionsmittel aufgebracht wird bzw. ist, und der Volumenhologrammschicht kann eine Trennschicht angeordnet sein. Zwischen der Ebene, in der das Expansionsmittel und/oder Kontraktionsmittel aufgebracht wird bzw. ist, und der Maskenschicht oder zwischen der Ebene der Maskenschicht und der Volumenhologrammschicht kann eine Trennschicht angeordnet sein. Alternativ kann das Expansionsmittel und/oder Kontraktionsmittel auch in verkapselter Form vorliegen.

Das erfindungsgemäße Sicherheitselement kann als Laminierfolie oder als Transferfolie ausgebildet sein. Eine Laminierfolie wird insbesondere als Laminierstreifen, Overlay bzw. Abdeckschicht oder Etikett, Inlett, Sicherheitsfaden, Fensterelement eingesetzt. Eine Transferfolie ist vorzugsweise eine Heißprägefolie.

Bei einer Ausführungsform weist das Sicherheitselement eine Trägerfolie auf. Das Sicherheitselement kann ferner eine Barriereschicht aufweisen. Vorzugsweise ist die Trägerfolie auf der einen Seite der Volumenhologrammschicht angeordnet und die Barriereschicht ist auf der anderen Seite der Volumenhologrammschicht angeordnet.

Vorzugsweise sind die Schichten des Sicherheitselements wie folgt angeordnet:
Trägerfolie
Expansionsmittel und/oder Kontraktionsmittel
Maskenschicht
Volumenhologrammschicht
ggf. Barriereschicht
oder
Trägerfolie
Volumenhologrammschicht
Maskenschicht
Expansionsmittel und/oder Kontraktionsmittel
ggf. Barriereschicht.

Bei einer Ausführungsform ist das erfindungsgemäße Sicherheitselement mit weiteren beugungsoptischen Effekten ausgerüstet, wie beispielsweise beugungsoptische Strukturen mit kinematischen Effekten und/oder filigrane Metallstrukturen deckungsgleich zu Reliefstrukturen mit beugungsoptischen Effekten.

Auf der dem Betrachter abgewandten Seite der Volumenhologrammschicht kann zusätzlich eine weitere Barriereschicht angeordnet sein.

Die im Hinblick auf das Verfahren definierten Begriffe und bevorzugten Ausführungsformen sind auch analog auf das Sicherheitselement übertragbar.

Im Folgenden wird die Erfindung anhand von mehreren Ausführungsbeispielen unter Zuhilfenahme der beiliegenden Zeichnungen beispielhaft verdeutlicht.

### Beispiele

Figur 1 zeigt die schematische Darstellung des Verfahrensablaufes einer hier nicht beanspruchten Ausführungsform eines Verfahrens zur Herstellung eines Sicherheitselementes, wobei das Expansionsmittel selektiv aufgedruckt wird.

Figur 2 zeigt die schematische Darstellung des Verfahrensablaufes einer weiteren Ausführungsform des erfindungsgemäßen Verfahrens zur Herstellung eines Sicherheitselementes, wobei eine Maskenschicht verwendet wird, um das Expansionsmittel selektiv aufzubringen.

Figur 3 zeigt die schematische Darstellung des Verfahrensablaufes einer weiteren Ausführungsform eines hier nicht beanspruchten Verfahrens zur Herstellung eines Sicherheitselementes, wobei das Extraktionsmittel in 2 verschiedenen Dicken/Konzentrationen auf die Volumenhologrammschicht selektiv aufgedruckt wird.

Figur 4 zeigt eine Draufsicht des Sicherheitselements mit der ersten und zweiten optischen Information

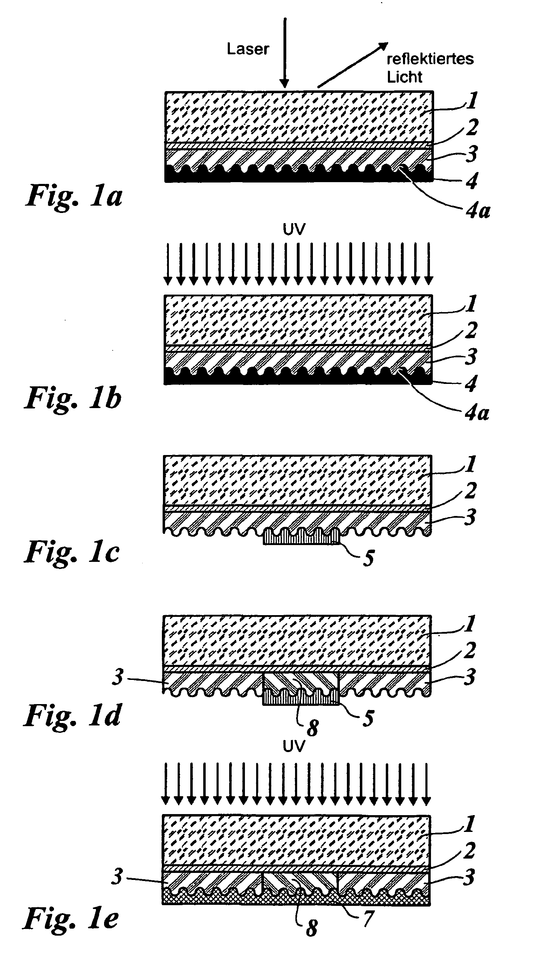

Bei einer Ausführungsform eines hier nicht beanspruchten Verfahrens wird eine auf einer Trägerfolie 1, ggf. auf darauf weiterhin aufgebrachten funktionellen Zwischenschichten 2, aufgebrachte Photopolymerschicht 3 mit der Vorderseite einer Schicht 4 mit einem Oberflächenrelief 4a in Kontakt gebracht. Anschließend wird das Oberflächenrelief 4 mit kohärentem Licht durch die Photopolymerschicht hindurch belichtet, wobei sich durch Überlagerung des auf dem Oberflächenrelief 4a eingestrahlten und des von dem Oberflächenrelief gebeugten Licht ein Interferenzmuster ausbildet, welches in der Photopolymerschicht ein Volumenhologramm einschreibt (Figur 1a). Das so in der Photopolymerschicht 3 eingebrachte Volumenhologramm wird sodann nach zumindest teilweiser Aushärtung der photosensitiven Schicht fixiert (Figur 1 b). Anschließend kann die Schicht mit dem Oberflächenrelief 4 von dem Photopolymer 3 entfernt werden. Auf die Oberfläche des Photopolymers wird ein Expansionsmittel 5 aufgedruckt (Fig. 1c). Das Expansionsmittel 5 diffundiert vorzugsweise bei erhöhter Temperatur von vorzugsweise 30°C in ca. 5 min in die Photopolymerschicht 3, wobei eine Photopolymerschicht bereitgestellt wird, die in dem entsprechenden Bereich einen vergrößerten Abstand der Braggschen Ebenen aufweist 8 (Fig. 1d). Das an der Oberfläche der Volumenhologrammschicht verbleibende Expansionsmittel kann entfernt werden. Vor oder nach dem Aufbringen einer Barriereschicht 7 wird das Sicherheitselement durch UV-Strahlung gehärtet (Fig. 1 e).

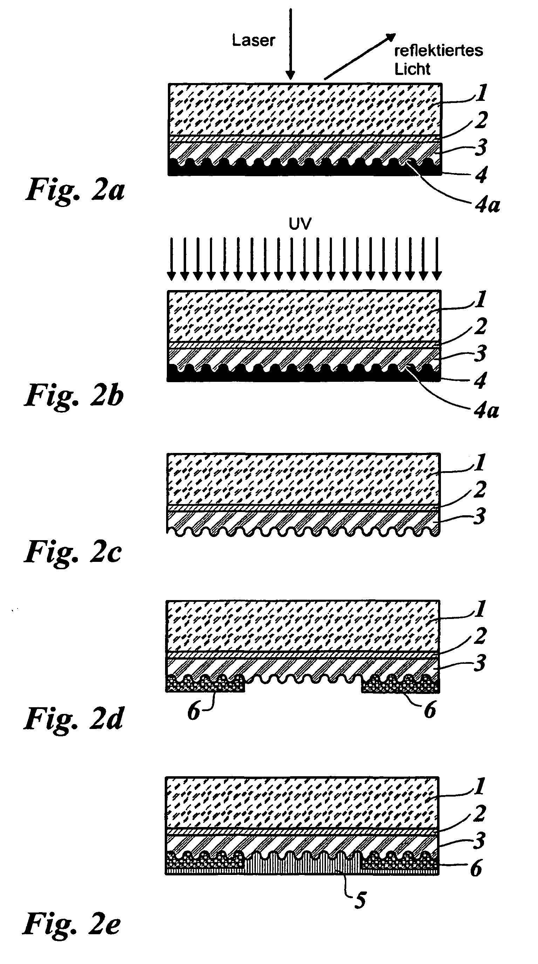

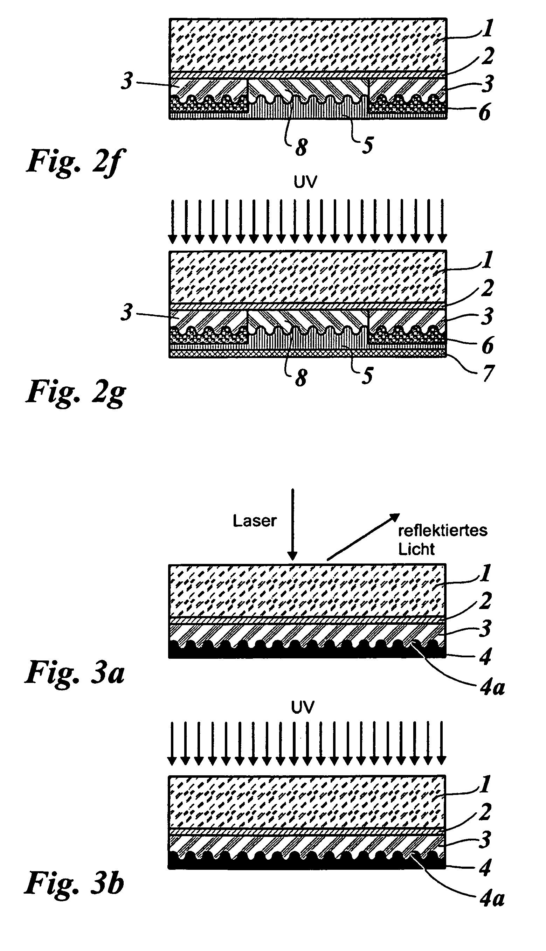

Bei einer Ausführungsform des erfindungsgemäßen Verfahrens wird eine auf einer Trägerfolie 1, ggf. auf einer darauf weiterhin aufgebrachten funktionelle Zwischenschicht 2, aufgebrachte Photopolymerschicht 3 mit einer Schicht 4 eines Oberflächenreliefmaster 4a in Kontakt gebracht. Anschließend wird das Oberflächenrelief 4a mit kohärentem Licht durch die Photopolymerschicht 3 hindurch belichtet, wobei sich durch Überlagerung des auf dem Oberflächenrelief eingestrahlten und des von dem Oberflächenrelief gebeugten Licht ein Interferenzmuster ausbildet, welches in der Photopolymerschicht 3 als Volumenhologramm eingeschrieben wird (Figur 2a). Das so in die Photopolymerschicht 3 eingebrachte Volumenhologramm wird sodann nach zumindest teilweiser Aushärtung der Photopolymerschicht fixiert (Figur 2b). Diese Schicht wird auch als Volumenhologrammschicht bezeichnet. Anschließend kann die Schicht mit dem Oberflächenrelief 4a von dem Photopolymer 3 entfernt werden (Fig. 2c). Auf die Oberfläche des Photopolymers 3 kann eine Maskenschicht 6 in Form eines Musters und/oder Bildes aufgedruckt werden (Fig. 2d). Die teilweise mit der Maskenschicht bedeckte Volumenhologrammschicht wird vollständig mit einem Expansionsmittel 5 überzogen (Fig. 2e). Das Expansionsmittel 5 diffundiert vorzugsweise bei erhöhter Temperatur, vorzugsweise von ca. 30°C in ca. 5min in die Photopolymerschicht 3, wobei eine Photopolymerschicht 8 bereitgestellt wird, die in dem entsprechenden Bereich einen vergrößerten Abstand der Braggschen Ebenen aufweist (Fig. 2f). Das an der Oberfläche der Volumenhologrammschicht verbliebene Expansionsmittel 5 kann entfernt werden. Vor und/oder nach dem Aufbringen einer Barriereschicht 7 kann das Sicherheitselement durch UV-Strahlung gehärtet werden (Fig. 2 g).

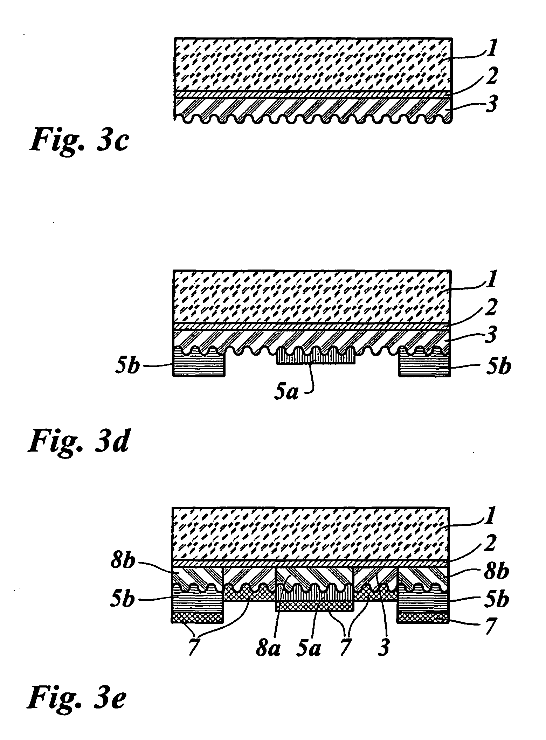

Bei einer Ausführungsform eines hier nicht beanspruchten Verfahrens wird eine auf einer Trägerfolie 1, ggf. auf darauf weiterhin aufgebrachten funktionellen Zwischenschichten 2, aufgebrachte Photopolymerschicht 3 mit der Vorderseite einer Schicht 4 mit Oberflächenrelief 4a in Kontakt gebracht. Anschließend wird das Oberflächenrelief 4a mit kohärentem Licht durch die Photopolymerschicht 3 hindurch belichtet, wobei sich durch Überlagerung des auf das Oberflächenrelief eingestrahlten und des von dem Oberflächenrelief gebeugten Lichtes ein Interferenzmuster ausbildet, welches in der Photopolymerschicht als Volumenhologramm eingeschrieben wird (Figur 3a). Das so in die Photopolymerschicht eingebrachte Volumenhologramm wird sodann nach zumindest teilweiser Aushärtung der Photopolymerschicht 3 fixiert (Figur 3b). Anschließend kann die Schicht 4 mit dem Oberflächenreliefmaster 4a von dem Photopolymer 3 entfernt werden (Fig. 3c). Auf die Oberfläche des Photopolymers kann ein Expansionsmittel 5 mit verschiedenen Dicken oder Konzentrationen (5a,b) aufgedruckt werden (Fig. 3d). Das Expansionsmittel 5 diffundiert vorzugsweise bei erhöhter Temperatur, vorzugsweise ca. 30°C in ca. 5 min in die Photopolymerschicht 3, wobei eine Photopolymerschicht 8a,b bereitgestellt wird, die in dem entsprechenden Bereich einen vergrößerten Abstand der Braggschen Ebenen aufweist (Fig. 3e), wobei abhängig von der Menge/Konzentration des diffundierten Expansionsmittels 5 eine unterschiedliche Expansion der Volumenhologrammschicht 3 stattfindet. Das an der Oberfläche der Volumenhologrammschicht verbleibende Expansionsmittel 5 kann entfernt werden. Nach dem Aufbringen einer Barriereschicht 7 wird das Sicherheitselement durch UV-Strahlung gehärtet.

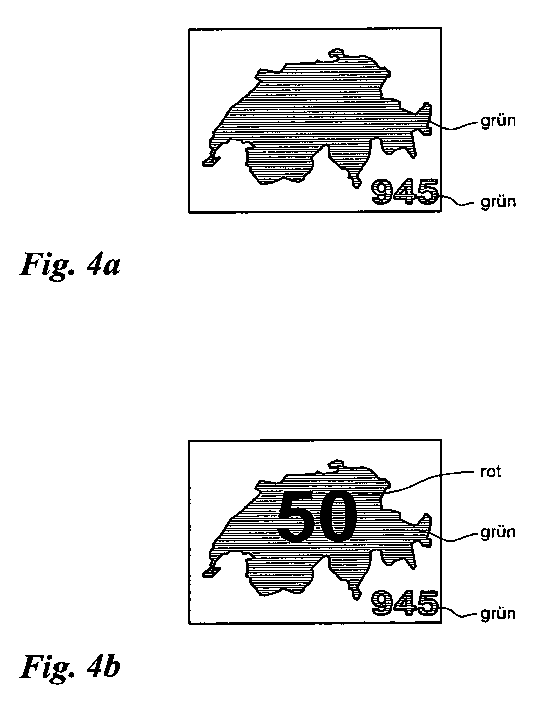

Figur 4a zeigt eine Draufsicht eines Volumenhologramms ohne Farbwechsel durch Eindiffusion eines Expansionsmittels. Das Volumenhologramm ist in Form des Umrisses der Schweiz und der Zahl 945 in grüner Farbe sichtbar.

Figur 4b zeigt eine Draufsicht eines Volumenhologramms mit Farbwechsel durch Eindiffusion eines Expansionsmittels. Das Volumenhologramm ist in

Form des Umrisses der Schweiz und der Zahl 945 in grüner Farbe sichtbar. Zusätzlich ist durch die Eindiffusion eines Expansionsmittels die Zahl 50 in roter Farbe in die Schweizer Landkarte eingeschrieben.

### Bezugszeichenliste

| | |
|---|---|
| 1 | Trägerfolie |
| 2 | Funktionsschichten |
| 3 | Photopolymer/Volumenhologrammschicht |
| 4 | Schicht mit Oberflächenrelief |
| 4a | Oberflächenrelief |
| 5 | Expansionsmittel |
| 6 | Maskenschicht |
| 7 | Barriereschicht |
| 8 | expandierte Volumenhologrammschicht |

## Patentansprüche

1. Verfahren zum Herstellen eines Sicherheitselements in Form eines mehrschichtigen Folienkörpers, insbesondere einer Laminierfolie oder einer Transferfolie, umfassend die Schritte:
a1) Bereitstellen einer Trägerfolie (1),
b1) Aufbringen einer Volumenhologrammschicht (3), welche aus einem Photopolymer gebildet ist, auf die Trägerfolie (1),
c1) Aufbringen mindestens eines Expansionsmittels (5) und/oder Kontraktionsmittels auf die Volumenhologrammschicht (3), wobei mindestens eine Maskenschicht (6) partiell auf die Volumenhologrammschicht (3) aufgebracht wird und anschließend eine vollflächige Schicht des mindestens einen Expansionsmittels (5) und/oder Kontraktionsmittels auf die Maskenschicht (6) und davon freie Bereiche der Volumenhologrammschicht (3) aufgebracht wird, und
d1) Zulassen einer zumindest teilweisen Diffusion des mindestens einen Expansionsmittels (5) und/oder Kontraktionsmittels in die Volumenhologrammschicht (3) unter lokaler Expansion und/oder Kontraktion des Braggschen Gitters, wobei hierdurch eine zweite optische Information bereit gestellt wird, wobei
vor der Diffusion des Expansionsmittels (5) und/oder Kontraktionsmittels in die Volumenhologrammschicht (3) in Schritt d1) das Volumenhologramm in das Photopolymer der Volumenhologrammschicht (3) eingeschrieben wird unter Bereitstellung einer ersten optischen Information, wobei in dem Photopolymer der Volumenhologrammschicht (3) bereichsweise unterschiedliche Brechungsindizes gebildet werden, die ein Braggsches Gitter unter Bereitstellung der ersten optischen Information ausbilden,
wobei die Trägerfolie (1), die Volumenhologrammschicht (3), die Maskenschicht (6), das mindestens eine Expansionsmittel (5) und/oder Kontraktionsmittel wie folgt angeordnet werden:
Trägerfolie (1)
Volumenhologrammschicht (3)
Maskenschicht (6)
Expansionsmittel und/oder Kontraktionsmittel,
wobei die Maskenschicht (6) zumindest teilweise für das mindestens eine Expansionsmittel (5) und/oder Kontraktionsmittel undurchlässig ist, und Öffnungen aufweist, die für das mindestens eine Expansionsmittel (5) und/oder Kontraktionsmittel durchlässig sind.

2. Verfahren zum Herstellen eines Sicherheitselements in Form eines mehrschichtigen Folienkörpers, insbesondere einer Laminierfolie oder einer Transferfolie, umfassend die Schritte:
a2) Bereitstellen einer Trägerfolie (1),
b2) partielles Aufbringen mindestens eines Expansionsmittels (5) und/oder Kontraktionsmittels auf die Trägerfolie (1), wobei mindestens eine vollflächige Schicht des mindestens einen Expansionsmittels (5) und/oder Kontraktionsmittels auf die Trägerfolie (1) aufgebracht wird und anschließend mindestens eine Maskenschicht (6) partiell auf das mindestens eine Expansionsmittel (5) und/oder Kontraktionsmittel aufgebracht wird,
c2) Aufbringen einer Volumenhologrammschicht (3), welche aus einem Photopolymer gebildet ist, auf das mindestens eine Expansionsmittel (5) und/oder Kontraktionsmittel und die Maskenschicht (6), die das mindestens eine Expansionsmittel (5) und/oder Kontraktionsmittel teilweise überdeckt, und
d2) Zulassen einer zumindest teilweisen Diffusion des mindestens einen Expansionsmittels (5) und/oder Kontraktionsmittels in die Volumenhologrammschicht (3) unter lokaler Expansion und/oder Kontraktion des Braggschen Gitters, wobei hierdurch eine zweite optische Information bereitgestellt wird, wobei
vor der Diffusion des Expansionsmittels (5) und/oder Kontraktionsmittels in die Volumenhologrammschicht (3) in Schritt d2) das Volumenhologramm in das Photopolymer der Volumenhologrammschicht (3) eingeschrieben wird unter Bereitstellung einer ersten optischen Information, wobei in dem Photopolymer der Volumenhologrammschicht (3) bereichsweise unterschiedliche Brechungsindizes gebildet werden, die ein Braggsches Gitter unter Bereitstellung der ersten optischen Information ausbilden,
wobei die Trägerfolie (1), die Volumenhologrammschicht (3), die Maskenschicht (6), das mindestens eine Expansionsmittel (5) und/oder Kontraktionsmittel wie folgt angeordnet werden:
Trägerfolie (1)
Expansionsmittel (5) und/oder Kontraktionsmittel Maskenschicht (6)
Volumenhologrammschicht (3),
wobei die Maskenschicht (6) zumindest teilweise für das mindestens eine Expansionsmittel (5) und/oder Kontraktionsmittel undurchlässig ist, und Öffnungen aufweist, die für das mindestens eine Expansionsmittel (5) und/oder Kontraktionsmittel durchlässig sind.

3. Verfahren nach Anspruch 1, wobei nach Schritt d1) das Expansionsmittel (5) und/oder Kontraktionsmittel, welches nicht in die Volumenhologrammschicht (3) diffundiert ist, zumindest teilweise entfernt wird.

4. Verfahren nach Anspruch 1, wobei nach Schritt d1),
ggf. nachdem das Expansionsmittel (5) und/oder Kontraktionsmittel, welches nicht in die Volumenhologrammschicht (3) diffundiert ist, zumindest teilweise entfernt wurde,
in einem darauf folgenden Schritt e) auf die Maskenschicht (6) eine Barriereschicht (7) aufgebracht wird.

5. Verfahren nach Anspruch 2, wobei nach Schritt d2),
ggf. nachdem das Expansionsmittel (5) und/oder Kontraktionsmittel, welches nicht in die Volumenhologrammschicht (3) diffundiert ist, zumindest teilweise entfernt wurde,
in einem darauf folgenden Schritt e) auf die Volumenhologrammschicht (3) eine Barriereschicht (7) aufgebracht wird.

6. Verfahren nach einem der vorhergehenden Ansprüche, wobei das Expansionsmittel (5) und/oder Kontraktionsmittel strahlenhärtbar oder thermisch härtbar ausgebildet sind.

7. Verfahren nach einem der vorhergehenden Ansprüche, wobei zwischen dem Expansionsmittel (5) und/oder dem Kontraktionsmittel und der Volumenhologrammschicht (3) eine Trennschicht aufgebracht wird.

8. Verfahren nach einem der vorhergehenden Ansprüche, wobei die Maskenschicht (6) nach dem Aufbringen strahlengehärtet oder thermisch gehärtet wird.

9. Verfahren nach einem der vorhergehenden Ansprüche, wobei das Expansionsmittel (5) und/oder Kontraktionsmittel nach Schritt d1) oder d2) strahlengehärtet oder thermisch gehärtet wird.

10. Verfahren nach einem der vorhergehenden Ansprüche, wobei das Expansionsmittel (5) und/oder Kontraktionsmittel in mindestens zwei verschiedenen Konzentrationen und/oder Dicken aufgebracht wird und/oder mindestens zwei verschiedene Expansionsmittel (5) und/oder Kontraktionsmittel mit unterschiedlichen Diffusionsverhalten aufgebracht werden.

11. Sicherheitselement in Form eines mehrschichtigen Folienkörpers, insbesondere Laminierfolie oder Transferfolie, wobei das Sicherheitselement eine Volumenhologrammschicht (3) aus einem Photopolymer aufweist, wobei in dem Photopolymer bereichsweise unterschiedliche Brechungsindizes zu einem Braggschen Gitter unter Bereitstellung einer ersten optischen Information ausgebildet sind, wobei innerhalb der Volumenhologrammschicht (3) mindestens ein Expansionsmittel (5) und/oder Kontraktionsmittel in Form eines Musters eingebracht ist, das einen Netzebenenabstand der Netzebenen des Braggschen Gitters innerhalb der Volumenhologrammschicht (3) verändert, wobei eine zweite optische Information bereit gestellt ist, **dadurch gekennzeichnet, dass** auf der Volumenhologrammschicht (3) in den Bereichen, in denen das mindestens eine Expansionsmittel (5) und/oder Kontraktionsmittel kein Muster ausbildet, eine Maskenschicht (6) aufgebracht ist, die zumindest teilweise für das mindestens eine Expansionsmittel (5) und/oder Kontaktionsmittel undurchlässig ist.

12. Sicherheitselement nach Anspruch 11, wobei die zweite optische Information ein von der ersten optischen Information unabhängiges Bild, Text, Logo, Photo, Barcode, Film, Guilloche, Designelement und/oder andere sicherheitsrelevante Information darstellt.

13. Sicherheitselement nach einem der vorhergehenden Ansprüche 11 bis 12, wobei auf der Volumenhologrammschicht (3) eine Barriereschicht (7) ausgebildet ist.

14. Sicherheitselement nach einem der vorhergehenden Ansprüche 11 bis 13, wobei das Sicherheitselement eine Trägerfolie (1) aufweist.

15. Sicherheitselement nach Anspruch 14, wobei das Sicherheitselement eine Trägerfolie (1) aufweist, die auf der einen Seite der Volumenhologrammschicht (3) ausgebildet ist und eine Barriereschicht (7) aufweist, die auf der anderen Seite der Volumenhologrammschicht (3) ausgebildet ist.

16. Sicherheitselement nach einem der vorhergehenden Ansprüche 11 bis 15, wobei die Schichten wie folgt angeordnet sind:
Trägerfolie
Expansionsmittel und/oder Kontraktionsmittel
Maskenschicht
Volumenhologrammschicht
ggf. Barriereschicht
oder
Trägerfolie
Volumenhologrammschicht
Maskenschicht
Expansionsmittel und/oder Kontraktionsmittel
ggf. Barriereschicht.

17. Sicherheitselement nach Anspruch 16, wobei entweder zwischen der Volumenhologrammschicht (3) und der Maskenschicht (6) oder zwischen der Maskenschicht (6) und dem Expansionsmittel (5) und/oder Kontraktionsmittel eine Trennschicht angeordnet ist.

## Claims

1. Method for producing a security element in the form of a multi-layer film body, in particular a laminate film or a transfer film, comprising the following steps:
a1) preparing a backing film (1),
b1) applying a volume hologram layer (3) formed from a photopolymer to the backing film (1),
c1) applying at least one expansion agent (5) and/or contraction agent to the volume hologram layer (3), wherein at least one mask layer (6) is partially applied to the volume hologram layer (3) and then a holohedral layer of the at least one expansion agent (5) and/or contraction agent is applied to the mask layer (6) and to regions of the volume hologram layer (3) that are free therefrom, and
d1) allowing an at least partial diffusion of the at least one expansion agent (5) and/or contraction agent into the volume hologram layer (3) under local expansion and/or contraction of the Bragg grating, wherein a second piece of optical information is provided by this, wherein
before the diffusion of the expansion agent (5) and/or contraction agent into the volume hologram layer (3) in step d1), the volume hologram is inscribed into the photopolymer of the volume hologram layer (3) to provide a first piece of optical information, wherein, in certain regions, various refractive indices are formed in the photopolymer of the volume hologram layer (3), which form a Bragg grating to provide the first piece of optical information,
wherein the backing film (1), the volume hologram layer (3), the mask layer (6), the at least one expansion agent (5) and/or contraction agent are arranged as follows:
backing film (1)
volume hologram layer (3)
mask layer (6)
expansion agent and/or contraction agent,
wherein the mask layer (6) is at least partially impermeable for the at least one expansion agent (5) and/or contraction agent, and has openings that are permeable for the at least one expansion agent (5) and/or contraction agent.

2. Method for producing a security element in the form of a multi-layer film body, in particular a laminate film or a transfer film, comprising the following steps:
a2) preparing a backing film (1),
b2) partially applying at least one expansion agent (5) and/or contraction agent to the backing film (1), wherein at least one holohedral layer of the at least one expansion agent (5) and/or contraction agent is applied to the backing film (1) and then at least one mask layer (6) is partially applied to the at least one expansion agent (5) and/or contraction agent,
c2) applying a volume hologram layer (3) formed from a photopolymer to the at least one expansion agent (5) and/or contraction agent and to the mask layer (6), which partially covers the at least one expansion agent (5) and/or contraction agent, and
d2) allowing an at least partial diffusion of the at least one expansion agent (5) and/or contraction agent into the volume hologram layer (3) under local expansion and/or contraction of the Bragg grating, wherein a second piece of optical information is provided by this, wherein
before the diffusion of the expansion agent (5) and/or contraction agent into the volume hologram layer (3) in step d2), the volume hologram is inscribed into the photopolymer of the volume hologram layer (3) to provide a first piece of optical information, wherein, in certain regions, various refractive indices are formed in the photopolymer of the volume hologram layer (3), which form a Bragg grating to provide the first piece of optical information,
wherein the backing film (1), the volume hologram layer (3), the mask layer (6), the at least one expansion agent (5) and/or contraction agent are arranged as follows:
backing film (1)
expansion agent (5) and/or contraction agent
mask layer (6)
volume hologram layer (3),
wherein the mask layer (6) is at least partially impermeable for the at least one expansion agent (5) and/or contraction agent, and has openings that are permeable for the at least one expansion agent (5) and/or contraction agent.

3. Method according to claim 1, wherein, after step d1), the expansion agent (5) and/or contraction agent that is not diffused into the volume hologram layer (3) is at least partially removed.

4. Method according to claim 1, wherein, after step d1),
if necessary, after the expansion agent (5) and/or contraction agent that is not diffused into the volume hologram layer (3) has been at least partially removed,
a barrier layer (7) is applied to the mask layer (6) in a subsequent step e).

5. Method according to claim 2, wherein, after step d2),
if necessary, after the expansion agent (5) and/or contraction agent that is not diffused into the volume hologram layer (3) has been at least partially removed,
a barrier layer (7) is applied to the volume hologram layer (3) in a subsequent step e).

6. Method according to one of the preceding claims, wherein the expansion agent (5) and/or contraction agent is designed to be radiation curable or thermally curable.

7. Method according to one of the preceding claims, wherein a separating layer is applied between the expansion agent (5) and/or the contraction agent and the volume hologram layer (3).

8. Method according to one of the preceding claims, wherein the mask layer (6) is rendered radiation-curable or thermally curable after having been applied.

9. Method according to one of the preceding claims, wherein the expansion agent (5) and/or contraction agent is rendered radiation-curable or thermally curable after step d1) or d2).

10. Method according to one of the preceding claims, wherein the expansion agent (5) and/or contraction agent is applied in at least two different concentrations and/or thicknesses and/or at least two different expansion agents (5) and/or contraction agents with different diffusive behaviour are applied.

11. Security element in the form of a multi-layer film body, in particular laminate film or transfer film, wherein the security element possesses a volume hologram layer (3) made from a photopolymer, wherein, in certain regions, various refractive indices of a Bragg grating in the photopolymer are formed to provide a first piece of optical information,
wherein at least one expansion agent (5) and/or contraction agent is inserted within the volume hologram layer (3) in the form of a pattern that changes a lattice plane gap of the lattice plane of the Bragg grating within the volume hologram layer (3), wherein a second piece of optical information is provided, **characterised in that** a mask layer (6), which is at least partially impermeable for the at least one expansion agent (5) and/or contraction agent, is applied to the volume hologram layer (3) in the regions in which the at least one expansion agent (5) and/or contraction agent does not form a pattern.

12. Security element according to claim 11, wherein the second piece of optical information depicts an image, text, logo, photo, barcode, film, guilloche, design element and/or other security-relevant information that are/is independent from the first piece of optical information.

13. Security element according to one of the preceding claims 11 to 12, wherein a barrier layer (7) is applied to the volume hologram layer (3).

14. Security element according to one of the preceding claims 11 to 13, wherein the security element possesses a backing film (1).

15. Security element according to claim 14, wherein the security element possesses a backing film (1) that is designed on the one side of the volume hologram layer (3) and a barrier layer (7) that is designed on the other side of the volume hologram layer (3).

16. Security element according to one of the preceding claims 11 to 15, wherein the layers are arranged as follows:
backing film
expansion agent and/or contraction agent
mask layer
volume hologram layer
barrier layer, if necessary,
or
backing film
volume hologram layer
mask layer
expansion agent and/or contraction agent
barrier layer, if necessary.

17. Security element according to claim 16, wherein a separating layer is arranged either between the volume hologram layer (3) and the mask layer (6) or between the mask layer (6) and the expansion agent (5) and/or contraction agent.

## Revendications

1. Procédé de fabrication d'un élément de sécurité sous la forme d'un corps de feuille multicouche, en particulier d'une feuille stratifiée ou une feuille de transfert, comportant les étapes suivante :
a1) mise à disposition d'une feuille support (1), b1) application d'une couche d'hologramme de volume (3) qui est constituée d'un photopolymère, sur la feuille support (1),
c1) application d'au moins un agent d'expansion (5) et/ou agent de contraction sur la couche d'hologramme de volume (3), au moins une couche de masque (6) étant partiellement appliquée sur la couche d'hologramme de volume (3) et une couche sur toute la surface de l'au moins un agent d'expansion (5) et/ou agent de contraction étant ensuite appliquée sur la couche de masque (6) et des zones exemptes de celle-ci de la couche d'hologramme de volume (3), et
d1) autorisation d'une diffusion au moins partielle d'au moins un agent d'expansion (5) et/ou agent de contraction dans la couche d'hologramme de volume (3) sous expansion et/ou contraction locale du réseau de Bragg, une seconde information optique étant mise à disposition par là-même,
avant la diffusion de l'agent d'expansion (5) et/ou agent de contraction dans la couche d'hologramme de volume (3) à l'étape d1), l'hologramme de volume étant inscrit dans le photopolymère de la couche d'hologramme de volume (3) en mettant à disposition une première information optique, des indices de réfraction différents par endroits étant formés dans le photopolymère de la couche d'hologramme de volume (3), lesquels réalisent un réseau de Bragg en mettant à disposition la première information optique,
la feuille support (1), la couche d'hologramme de volume (3), la couche de masque (6), l'au moins un agent d'expansion (5) et/ou agent de contraction étant disposés comme suit :
feuille support (1)
couche d'hologramme de volume (3)
couche de masque (6)
agent d'expansion et/ou agent de contraction,
la couche de masque (6) étant imperméable au moins en partie pour l'au moins un agent d'expansion (5) et/ou agent de contraction, et présentant des ouvertures qui sont perméables à l'au moins un agent d'expansion (5) et/ou agent de contraction.

2. Procédé de fabrication d'un élément de sécurité sous la forme d'un corps de feuille multicouche, en particulier d'une feuille stratifiée ou une feuille de transfert, comprenant les étapes suivantes :
a2) mise à disposition d'une feuille support (1),
b2) application partielle d'au moins un agent d'expansion (5) et/ou agent de contraction sur la feuille support (1), au moins une couche sur toute la surface de l'au moins un agent d'expansion (5) et/ou agent de contraction étant appliquée sur la feuille support (1) et au moins une couche de masque (6) étant ensuite appliquée en partie sur l'au moins un agent d'expansion (5) et/ou agent de contraction,
c2) application d'une couche d'hologramme de volume (3) qui est constituée d'un photopolymère, sur l'au moins un agent d'expansion (5) et/ou agent de contraction et la couche de masque (6) qui recouvre en partie l'au moins un agent d'expansion (5) et/ou agent de contraction, et
d2) autorisation d'une diffusion au moins partielle de l'au moins un agent d'expansion (5) et/ou agent de contraction dans la couche d'hologramme de volume (3) sous expansion et/ou contraction locale du réseau de Bragg, une seconde information optique étant mise à disposition par là-même,
avant la diffusion de l'agent d'expansion (5) et/ou agent de contraction dans la couche d'hologramme de volume (3) à l'étape d2), l'hologramme de volume étant inscrit dans le photopolymère de la couche d'hologramme de volume (3) en mettant à disposition une première information optique, des indices de réfraction différents par endroits étant formés dans le photopolymère de la couche d'hologramme de volume (3), lesquels réalisent un réseau de Bragg en mettant à disposition la première information optique,
la feuille support (1), la couche d'hologramme de volume (3), la couche de masque (6), l'au moins un agent d'expansion (5) et/ou agent de contraction étant disposés comme suit :
feuille support (1)
agent d'expansion (5) et/ou agent de contraction couche de masque (6)
couche d'hologramme de volume (3)
la couche de masque (6) étant imperméable au moins en partie pour l'au moins un agent d'expansion (5) et/ou agent de contraction, et présentant des ouvertures qui sont perméables à l'au moins un agent d'expansion (5) et/ou agent de contraction.

3. Procédé selon la revendication 1, après l'étape d1), l'agent d'expansion (5) et/ou agent de contraction qui n'est pas diffusé dans la couche d'hologramme de volume (3), étant au moins en partie retiré.

4. Procédé selon la revendication 1, après l'étape d1), une couche barrière (7) étant appliquée dans une étape e) suivante sur la couche de masque (6) éventuellement après que l'agent d'expansion (5) et/ou agent de contraction qui n'est pas diffusé dans la couche d'hologramme de volume (3), a été au moins en partie retiré.

5. Procédé selon la revendication 2, après l'étape d2), une couche barrière (7) étant appliquée dans une étape e) suivante sur la couche d'hologramme de volume (3) éventuellement après que l'agent d'expansion (5) et/ou agent de contraction qui n'est pas diffusé dans la couche d'hologramme de volume (3), a été au moins en partie retiré.

6. Procédé selon l'une quelconque des revendications précédentes, l'agent d'expansion (5) et/ou agent de contraction étant réalisé de manière radiodurcissable ou thermodurcissable.

7. Procédé selon l'une quelconque des revendications précédentes, une couche de séparation étant appliquée entre l'agent d'expansion (5) et/ou agent de contraction et la couche d'hologramme de volume (3).

8. Procédé selon l'une quelconque des revendications précédentes, la couche de masque (6) étant radiodurcie ou thermodurcie après l'application.

9. Procédé selon l'une quelconque des revendications précédentes, l'agent d'expansion (5) et/ou agent de contraction étant radiodurci ou thermodurci après l'étape d1) ou d2).

10. Procédé selon l'une quelconque des revendications précédentes, l'agent d'expansion (5) et/ou agent de contraction étant appliqué dans au moins deux différentes concentrations et/ou épaisseurs et/ou au moins deux différents agents d'expansion (5) et/ou agents de contraction avec différents comportements à la diffusion étant appliqués.

11. Elément de sécurité sous la forme d'un corps de feuille multicouche, en particulier une feuille stratifiée ou feuille de transfert, l'élément de sécurité présentant une couche d'hologramme de volume (3) en un photopolymère, des indices de réfraction différents par endroits étant réalisés dans le photopolymère en un réseau de Bragg en mettant à disposition une première information optique, au moins un agent d'expansion (5) et/ou agent de contraction sous la forme d'un modèle étant introduit dans la couche d'hologramme de volume (3), lequel modifie une distance entre des plans du réseau de Bragg dans la couche d'hologramme de volume (3), une seconde information optique étant mise à disposition, **caractérisé en ce qu'**une couche de masque (6) est appliquée sur la couche d'hologramme de volume (3) dans les zones, dans lesquelles l'au moins un agent d'expansion (5) et/ou agent de contraction ne réalise aucun modèle, laquelle couche est imperméable au moins en partie pour l'au moins un agent d'expansion (5) et/ou agent de contraction.

12. Elément de sécurité selon la revendication 11, la seconde information optique représentant une image, un texte, un logo, une photo, un code barre, un film, un guillochis, un élément de conception et/ou autre information importante pour la sécurité indépendante de la première information optique.

13. Elément de sécurité selon l'une quelconque des revendications 11 à 12, une couche barrière (7) étant réalisée sur la couche d'hologramme de volume (3).

14. Elément de sécurité selon l'une quelconque des revendications 11 à 13, l'élément de sécurité présentant une feuille support (1).

15. Elément de sécurité selon la revendication 14, l'élément de sécurité présentant une feuille support (1) qui est réalisée sur un côté de la couche d'hologramme de volume (3) et présentant une couche barrière (7) qui est réalisée sur l'autre côté de la couche d'hologramme de volume (3).

16. Elément de sécurité selon l'une quelconque des revendications 11 à 15, les couches étant disposées comme suit :
feuille support
agent d'expansion et/ou agent de contraction couche de masque
couche d'hologramme de volume
éventuellement couche barrière
ou
feuille support
couche d'hologramme de volume
couche de masque
agent d'expansion et/ou agent de contraction éventuellement couche barrière.

17. Elément de sécurité selon la revendication 16, une couche de séparation étant disposée entre la couche d'hologramme de volume (3) et la couche de masque (6) ou entre la couche de masque (6) et l'agent d'expansion (5) et/ou agent de contraction.
